# EUROPEAN PATENT SPECIFICATION

(11) **EP 1 845 040 B1**
(45) Date of publication and mention of the grant of the patent: **10.06.2009**
(21) Application number: 07105982.8
(22) Date of filing: 11.04.2007
(51) Int. Cl.: B65G 47/91, B21F 23/00

(54) **Method for loading metal bars into a processing machine and relative loading device for metal bars**
Verfahren zur Ladung von Metallbalken in ein Verarbeitungsgerät und damit zusammenhängendes Ladegerät für Metallbalken
Procédé pour le chargement de barres métalliques dans une machine de traitement et dispositif de chargement pour barres métalliques correspondant

(30) Priority: 13.04.2006 IT UD20060096
(43) Date of publication of application: 17.10.2007
(73) Proprietor: M.E.P. Macchine Elettroniche Piegatrici S.p.A., 33010 Reana del Rojale (UD) (IT)
(72) Inventor: Del Fabro, Giorgio, 33100, Udine (IT)
(74) Representative: Petraz, Gilberto Luigi

(56) References cited:
- EP-A2- 1 356 875
- WO-A-20/05080021
- US-A1- 2004 165 980

## Description

### FIELD OF THE INVENTION

The present invention concerns a method and the relative device for loading, in a completely automatic manner, a plurality of metal bars grouped into bundles into a processing machine according to the preamble of claims 1 and 7 respectively. In particular, the processing machine to which the invention refers is advantageously a stirrup-making machine, a bending machine, a shaping machine or tying machine, or another type of similar or comparable machine.

### BACKGROUND OF THE INVENTION

Processing machines for metal bars that process one or more bars at a time, for example to make shaped pieces for the building industry or other types of product, are known. The machines that use metal bars normally have one or more containers mounted and/or made on a feed trolley in which respective bundles of bars are disposed, with different diameters from one container to the other, from which the bars to be sent to the machine are picked up each time.

The operation to pick up and extract the individual bars from the bundle is often very difficult as the bars, which can reach lengths of 12 meters or more, arrive haphazardly, twisted and tangled with each other.

The published application for an International Patent WO-A-2005/080021, in the name of the present Applicant, discloses a method for loading metal bars and a device according to the preamble of claims 1 and 7 respectively, in this document disclosed are a feed device comprising first magnetic means that separates from a bundle an end segment of a plurality of bars and disposes said end segments on a plane raised with respect to the bundle, and second magnetic means which picks up, from the first magnetic means, one bar at a time from the plurality of bars and unloads it in a desired release position, in particular into the drawing unit of the processing machine, so that the bar can be sent for processing.

This device, even though extremely efficient, picks up the bars but always remains in the same relative position with respect to the trolley, and therefore to the container, mainly central, with respect to the bundle. This determines, when the level of the bars in the container is greatly reduced, a mainly lateral disposition of the remaining bars, with consequent difficulty for the first magnetic means to pick up the bars, and the need for an intervention to redistribute the bars in the container.

Furthermore, as the feed trolley consists of containers of the same size for bars with different diameters, there is an initial quantity, and therefore consumption, of bars different for each bundle; this requires a constant control by the operators in order to intervene manually, if necessary, stopping the feed device and loading new bundles of bars onto the feed trolley.

This problem is exacerbated, moreover, in the typical case where the shape of the container is triangular with a progressive reduction in width between the top and the bottom.

One purpose of the present invention is to perfect a method for loading metal bars that allows to pick up the metal bars from the feed trolley automatically, according to their actual disposition in the relative container and to the real load condition thereof.

Another purpose of the present invention is to perfect a method that allows to pick up all the bars present in the container without requiring interventions to redistribute the bars in the container.

The Applicant has devised, tested and embodied the present invention to obtain these purposes and other advantages.

### SUMMARY OF THE INVENTION

The present invention is disclosed in the method claim 1 and the device claim 7 which are appended, while the dependent claims describe other characteristics of the invention or variants to the main inventive idea.

In accordance with the above purposes, the method for loading metal bars according to the present invention is applied in order to load, with known loading means, one or more metal bars into a processing machine, such as a bending machine, a stirrup-making machine or similar, picking up said metal bars from respective bundles disposed separately in relative containing means for the bars, such as for example individual containers of a feed trolley.

According to the present invention, the method comprises at least an initial set-up step, in which data is inserted concerning the weight of the bundles, normally known from the supplier, and the parameters of size, such as diameter and length, of the bars of the individual bundles; a following processing step in which the load condition, in terms of occupied volume, of the relative containing means of the bars is estimated; and a pick-up step in which, according to the estimated load condition, the containing means and the loading means are moved with respect to each other, by movement means, so as to condition the relative pick-up position between the upper layer, or level, of the bars and the loading means.

In this way, the metal bars are picked up from the relative containing means in an optimized manner, that is, following their actual disposition substantially on the whole width of the containing means, and thus preventing the remaining bars from staying positioned mainly on the sides of the containing means, especially in a condition of their imminent depletion.

This advantage allows to guarantee, substantially in every load condition, that the bars are picked up efficiently, without needing to be redistributed so that they can be gripped more easily.

Furthermore, with the method according to the present invention, for example simply by counting the bars picked up each time by the loading means, it is possible to calculate by means of the difference in volume, and in real time, the actual load condition of the relative containing means and, according to the size of the latter, to estimate the actual height of the load level.

Advantageously, different load thresholds can be provided, and once these have been exceeded the movement means is engaged in order to vary the position and/or the pick-up sequence performed by the loading means.

In this way, the device according to the present invention automatically modulates the pick-up conditions according to the load level, and if necessary according to the shape and the size of the containing means.

The loading device according to the present invention is associated with a command and control unit which allows the operator an immediate display of the state of the actual load of the individual containing means, so as to suggest a possible intervention if the bars are about to finish.

### BRIEF DESCRIPTION OF THE DRAWINGS

These and other characteristics of the present invention will become apparent from the following description of a preferential form of embodiment, given as a non-restrictive example with reference to the attached drawings in which:
- fig. 1 is a block diagram of a method for loading metal bars according to the present invention;
- fig. 2 shows schematically a first sub-step of the pick-up performed with the loading method in fig. 1;
- fig. 3 shows schematically a second sub-step of the pick-up performed with the loading method in fig. 1;
- fig. 4 shows schematically a third sub-step of the pick-up performed with the loading method fig. 1.

### DETAILED DESCRIPTION OF A PREFERENTIAL FORM OF EMBODIMENT

With reference to the attached drawings, a loading method, and the relative device 10, according to the present invention are applied in order to load one or more metal bars 11 at a time onto a traditional processing machine of such metal bars 11.

The metal bars 11 are grouped according to diameter into relative bundles, each disposed in a relative basket 12 of a loading trolley, not shown here, of the processing machine. In this specific case each basket 12 has a cross section converging downwards.

The loading device 10, in this specific case, is of the magnetic type and comprises a first vertically moving magnet 13 which picks up a certain number of metal bars 11 from the basket 12, and a second horizontally moving magnet 15 which picks up a desired number of metal bars 11 from the first magnet 13 so as to dispose them in cooperation with a known drawing member 16, for example with rollers, of the processing machine.

The loading device 10 also comprises a movement member associated, in this specific case, with the basket 12 and able to move it with respect to the first magnet 13.

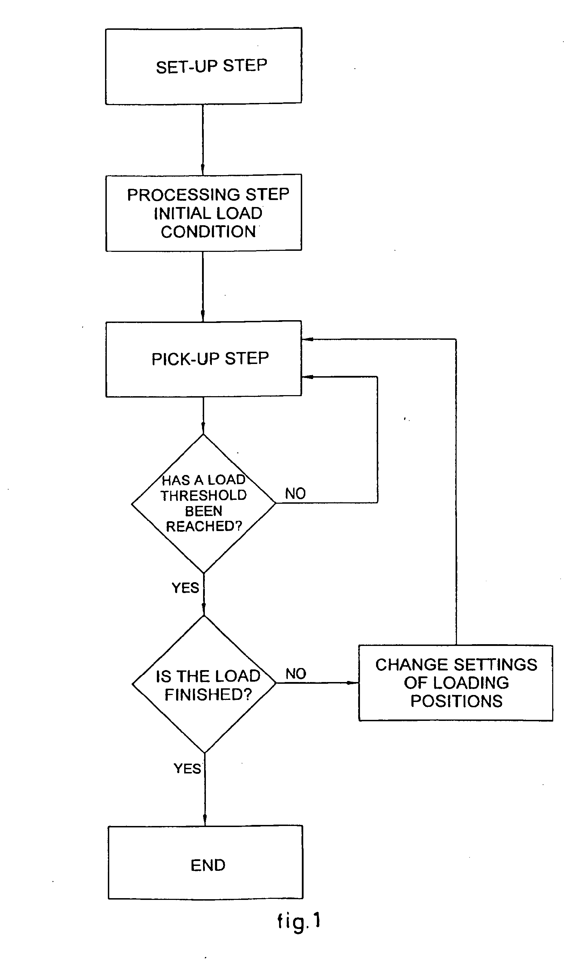

According to the invention, the method for loading the metal bars 11 (fig. 1) provides an initial set-up step, in which an operator, for example by means of a console, not shown here, disposed on a control workstation of the processing machine, inserts, for each bundle of metal bars 11 provided, the data relating to the weight of the bundle, and the diameter and length of the individual metal bars 11 which form it.

During this step relative load thresholds of the basket 12 can be set, if not programmed already, in order to indicate the desired load levels thereof.

The data inserted is then processed in a second processing step, so as to obtain, knowing the size of the relative basket 12, an estimate of the actual load thereof, in terms of volume, and also establishing inside which load threshold the upper layer of the metal bars 11 is situated.

This load estimate allows, for example by counting the bars picked up by the second magnet 15, to calculate by means of the difference in volumes the actual load condition of the basket 12 at the end of each loading cycle, and the level to which the upper layer of metal bars 11 progressively drops.

Advantageously, the console displays schematically the estimated volume in relation to the basket 12 and the level that the upper layer of metal bars 11 is at, so that the operator can understand intuitively and directly from his command position, the real load condition of the basket 12.

After the processing step, the method according to the present invention provides a pick-up step in which, according to the estimated load threshold, in this specific case, by means of the movement member, the baskets 12 are moved with respect to the first magnet 13, so that this selectively picks up the metal bars 11 from different zones of the upper layer of bars 11, in order to cover the whole width of the basket 12 and guarantee an even unloading thereof.

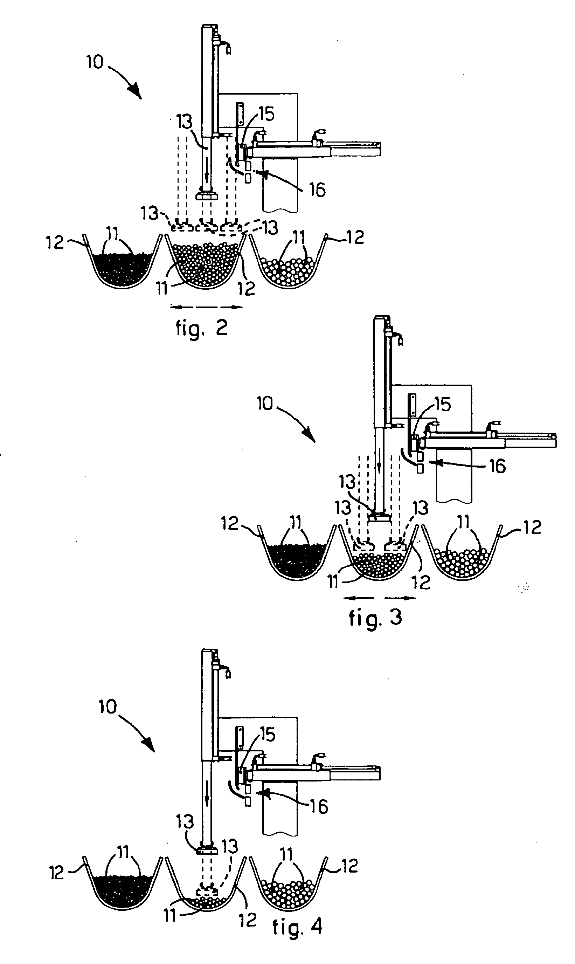

In fact, as shown schematically in the operational sequence of figs. 2, 3 and 4, when the basket 12 is fully loaded, the upper layer of the metal bars 11 is situated at the first load threshold, the basket 12 is moved alternately into three different pick-up positions in order to allow the metal bars 11 to be picked up first from the right, then from the left and then from the center of the upper layer of the bars 11.

In general, the number of pick-up positions is calculated according to the width of the first magnet 13 and the width of the basket 12 in correspondence with the upper layer of the bars 11.

In figures 2, 3 and 4, so as to give the drawings greater clarity, the relative positions of the first magnet 13 with respect to the basket 12 are illustrated with a line of dashes, even if in the solution described here, it is the basket 12 that moves with respect to the first magnet 13.

As the basket 12 is emptied, the actual load condition of the basket 12 and the level of the upper layer of remaining metal bars 11 is calculated by means of the difference in volume, as said before.

Once a second load threshold has been reached (fig. 3), that is, when the basket 12 is half loaded, the latter is moved between two, and no more than three, pick-up positions, since its width at this level is reduced. Continuing with the pick-up of the metal bars from the basket 12, a third load threshold is reached (fig. 4), in which the metal bars 11 are almost finished. In this condition only one central pick-up position is provided, so as to position the first magnet 13 in correspondence with the minimum convergence of the basket 12.

The loading device 10 automatically stops once the complete unloading of the basket 12 has been calculated, always by means of the difference in volumes, and if necessary it emits an optical and/or acoustic signal.

It is clear, however, that modifications and/or additions of parts can be made to the method and to the device 10 as described heretofore, without departing from the field and scope of the present invention, as defined by the appended claims.

For example, it comes within the field and scope of the present invention to provide that instead of the first and second magnet 13 and 15, loading means with grippers, roller or other known type are provided.

It also comes within the field and scope of the present invention to provide one or more load cells associated with the baskets 12 in order to weigh them in real time and thus deduce their load condition.

According to another variant the movement member 17 is associated with the first magnet 13 so as to move it with respect to the baskets 12 in order to assume the different pick-up positions provided.

It is also clear that, although the present invention has been described with reference to specific examples, a person of skill in the art shall be able to achieve many other equivalent forms of the method for loading metal bars to a processing machine and the relative loading device for metal bars, having the characteristics as set forth in the claims and hence all coming within the scope of protection defined thereby.

## Claims

1. Method for loading metal bars (11) to a processing machine using loading means (13, 15, 16), said metal bars (11) being disposed in respective bundles contained separately in relative containing means (12), **characterized in that** it comprises at least a first set-up step, in which the data relating to the weight of the bundles and the parameters of size of said metal bars (11) is inserted; a second processing step, in which the load condition, in terms of occupied volume, of the relative containing means (12) of said metal bars (11) is estimated; and a third pick-up step in which, according to said estimated load condition, said containing means (12) and said loading means (13, 15, 16) are moved with respect to each other, by relative movement means, so as to condition the relative pick-up position between the upper layer, or level, of said metal bars (11) and said loading means (13, 15, 16), wherein during said third pick-up step the number of metal bars (11) picked up each time by said loading means (13, 15, 16) is counted, and according to said count the progressive reduction of the load condition of the relative containing means (12) is calculated by means of the difference in volume, estimating the actual height of the load level.

2. Method as in claim 1, **characterized in that** in said first set-up step different load thresholds are defined.

3. Method as in claim 1 and 2, **characterized in that** when said height of the load level exceeds one of said load thresholds, the movement member is commanded to make a variation in the type of relative movement between said upper layer of said metal bars (11) and said loading means (13, 15, 16).

4. Method as in claim 3, wherein said containing means comprises at least a basket (12) with a transverse segment substantially converging downwards, **characterized in that** for each of said load thresholds a relative number of pick-up positions is provided, distributed on said upper layer of said metal bars (11).

5. Method as in claim 4, **characterized in that** said number of pick-up positions is a function of the relative sizes of said basket (12) and of said loading means (13, 15, 16).

6. Method as in any claim hereinbefore, **characterized in that** said load condition estimated in said second processing step is at least schematically represented by a command and control unit able to allow the operator an intuitive display of the actual load condition of the individual containing means (12).

7. Loading device for metal bars (11) associated with a processing machine of said metal bars (11), said device comprising loading means (13, 15, 16) able to load one or more of said metal bars (11) to said processing machine, and containing means (12) in which said metal bars (11) are disposed in respective bundles, **characterized in that** it also comprises movement means associated with said containing means (12) and/or said loading means (13, 15, 16) in order to condition the relative pick-up position between the upper layer of said metal bars (11) and said loading means (13, 15, 16), according to the estimated load condition of said containing means (12), the device also comprising a command and control unit able to receive, in a set-up step and for each bundle of bars (11) provided, the data relating to the weight of the bundle, and the parameter of size of the bars (11) which form it, to allow the operator an intuitive display of the actual load condition of the individual containing means (12), to count the number of metal bars (11) picked up each time by said loading means (13, 15, 16), and to calculate the progressive reduction of the load condition of the relative containing means (12) by means of the difference in volume, estimating the actual height of the load level.

## Patentansprüche

1. Verfahren zum Laden von Metallstangen (11) in eine Verarbeitungsmaschine unter der Verwendung von Lademitteln (13, 15, 16), wobei die Metallstangen (11) jeweils in Bündeln angeordnet sind, die getrennt in entsprechenden Behältermitteln (12) enthalten sind, **dadurch gekennzeichnet, dass** es folgende Schritte umfasst: mindestens einen ersten Einrichtungsschritt, in dem Daten eingegeben werden, die sich auf das Gewicht der Bündel und die Parameter der Größe der Metallstangen (11) beziehen; einen zweiten Verarbeitungsschritt, in dem der Ladezustand der jeweiligen Behältermittel (12) hinsichtlich eines mit Metallstangen (11) belegten Volumens geschätzt wird; und einen dritten Aufnahmeschritt, in dem gemäß dem geschätzten Ladezustand die Behältermittel (12) und die Lademittel (13, 15, 16) durch Relativbewegungsmittel relativ zueinander bewegt werden, um so die relative Aufnahmeposition zwischen der oberen Schicht bzw. dem Stand der Metallstangen (11) und den Lademitteln (13, 15, 16) einzustellen, wobei während des dritten Aufnahmeschritts die Anzahl von Metallstangen (11) gezählt wird, die jeweils von den Lademitteln (13, 15, 16) aufgenommen werden, und gemäß dieser Zählung die fortschreitende Verringerung des Ladezustands der entsprechenden Behältermittel (12) mittels der Differenz im Volumen berechnet wird, wobei die tatsächliche Höhe des Ladestands geschätzt wird.

2. Verfahren nach Anspruch 1, **dadurch gekennzeichnet, dass** im ersten Einrichtungsschritt unterschiedliche Ladeschwellenwerte definiert werden.

3. Verfahren nach Anspruch 1 und 2, **dadurch gekennzeichnet, dass**, wenn die Höhe des Ladestands einen der Ladeschwellenwerte übersteigt, das Bewegungselement angewiesen wird, eine Veränderung in der Art der Relativbewegung zwischen der oberen Schicht der Metallstangen (11) und den Lademitteln (13, 15, 16) vorzunehmen.

4. Verfahren nach Anspruch 3, wobei die Behältermittel mindestens einen Korb (12) mit einem Querschnitt aufweisen, der sich im Wesentlichen nach unten verjüngt, **dadurch gekennzeichnet, dass** für jeden der Ladeschwellenwerte eine entsprechende Zahl von Aufnahmepositionen vorgesehen ist, die auf der oberen Schicht der Metallstangen (11) verteilt sind.

5. Verfahren nach Anspruch 4, **dadurch gekennzeichnet, dass** die Anzahl von Aufnahmepositionen von den relativen Größen des Korbs (12) und den Lademitteln (13, 15, 16) abhängt.

6. Verfahren nach einem der vorhergehenden Ansprüche, **dadurch gekennzeichnet, dass** der in dem zweiten Verarbeitungsschritt geschätzte Ladezustand mindestens schematisch von einer Befehls- und Steuereinheit dargestellt wird, die dazu fähig ist, der Bedienperson eine intuitive Anzeige des tatsächlichen Ladezustands der einzelnen Behältermittel (12) zu ermöglichen.

7. Ladevorrichtung für Metallstangen (11), die einer Verarbeitungsmaschine der Metallstangen (11) zugeordnet ist, wobei die Vorrichtung Lademittel (13, 15, 16), die dazu fähig sind, eine oder mehrere der Metallstangen (11) in die Verarbeitungsmaschine zu laden, sowie Behältermittel (12) umfasst, in denen die Metallstangen (11) jeweils in Bündeln angeordnet sind, **dadurch gekennzeichnet, dass** sie auch Bewegungsmittel in Zuordnung zu den Behältermitteln (12) und/oder den Lademitteln (13, 15, 16) umfasst, um die relative Aufnahmeposition zwischen der oberen Schicht der Metallstangen (11) und den Lademitteln (13, 15, 16) gemäß dem geschätzten Ladezustand der Behältermittel (12) einzustellen, wobei die Vorrichtung auch eine Befehls- und Steuereinheit umfasst, die dazu fähig ist, in einem Einrichtungsschritt und für jedes vorgesehene Bündel von Stangen (11) die Daten, die sich auf das Gewicht des Bündels beziehen, sowie die Parameter der Größe der es bildenden Stangen (11) zu empfangen, um einer Bedienperson eine intuitive Anzeige des tatsächlichen Ladezustands der einzelnen Behältermittel (12) zu ermöglichen, um die Anzahl von Metallstangen (11) zu zählen, die jeweils von den Lademitteln (13, 15, 16) aufgenommen werden, und um die fortschreitende Verringerung des Ladezustands des entsprechenden Behältermittels (12) mittels der Differenz im Volumen zu berechnen, wobei die tatsächliche Höhe des Ladestands geschätzt wird.

## Revendications

1. Procédé pour le chargement de barres métalliques (11) dans une machine de traitement en utilisant un moyen de chargement (13, 15, 16), lesdites barres métalliques (11) étant disposées en faisceaux respectifs contenus séparément dans un moyen de contention (12) relatif, **caractérisé en ce qu'**il comprend au moins une première étape de configuration, dans laquelle les données concernant le poids des faisceaux et les paramètres de taille desdites barres métalliques (11) sont insérées ; une seconde étape de traitement, dans laquelle la condition de charge, en termes de volume occupé, du moyen de contention (12) relatif desdites barres métalliques (11) est estimée ; et une troisième étape de prélèvement dans laquelle, selon ladite condition de charge estimée, ledit moyen de contention (12) et ledit moyen de chargement (13, 15, 16) sont déplacés les uns par rapport aux autres, par un moyen de mouvement relatif, de façon à conditionner la position de prélèvement relative entre la couche ou le niveau supérieurs desdites barres métalliques (11) et ledit moyen de chargement (13, 15, 16), dans lequel pendant ladite troisième étape de prélèvement le nombre de barres métalliques (11) prélevées chaque fois par ledit moyen de chargement (13, 15, 16) est compté, et selon ledit nombre, la réduction progressive de la condition de charge du moyen de contention (12) relatif est calculée au moyen de la différence de volume, estimant la hauteur réelle du niveau de charge.

2. Procédé selon la revendication 1, **caractérisé en ce que** dans ladite première étape de configuration, différents seuils de charge sont définis.

3. Procédé selon les revendications 1 et 2, **caractérisé en ce que** quand ladite hauteur du niveau de charge dépasse l'un desdits seuils de charge, l'élément de mouvement est commandé pour réaliser une variation du type de mouvement relatif entre ladite couche supérieure desdites barres métalliques (11) et ledit moyen de chargement (13, 15, 16).

4. Procédé selon la revendication 3, dans lequel ledit moyen de contention comprend au moins un panier (12) avec un segment transversal convergent sensiblement vers le bas, **caractérisé en ce que** pour chacun desdits seuils de charge, un nombre relatif de positions de prélèvement est prévu, réparties sur ladite couche supérieure desdites barres métalliques (11).

5. Procédé selon la revendication 4, **caractérisé en ce que** ledit nombre de positions de prélèvement est fonction des tailles relatives dudit panier (12) et dudit moyen de chargement (13, 15, 16).

6. Procédé selon l'une quelconque des revendications précédentes, **caractérisé en ce que** ladite condition de charge estimée dans ladite seconde étape de traitement est représentée au moins schématiquement par une unité de commande et de contrôle capable de permettre à l'opérateur d'afficher de façon intuitive la condition de charge réelle du moyen de contention (12) individuel.

7. Dispositif de chargement pour des barres métalliques (11) associé à une machine de traitement desdites barres métalliques (11), ledit dispositif comprenant un moyen de chargement (13, 15, 16) capable de charger une ou plusieurs desdites barres métalliques (11) dans ladite machine de traitement, et un moyen de contention (12) dans lequel lesdites barres métalliques (11) sont disposées en faisceaux respectifs, **caractérisé en ce qu'**il comprend également un moyen de mouvement associé audit moyen de contention (12) et/ou audit moyen de chargement (13, 15, 16) afin de conditionner la position de prélèvement relative entre la couche supérieure desdites barres métalliques (11) et ledit moyen de chargement (13, 15, 16) selon la condition de charge estimée dudit moyen de contention (12), le dispositif comprenant également une unité de commande et de contrôle capable de recevoir, dans une étape de configuration et pour chaque faisceau de barres (11) fourni, les données concernant le poids du faisceau, et le paramètre lié à la taille des barres (11) qui le composent, pour permettre à l'opérateur d'afficher de façon intuitive la condition de charge réelle du moyen de contention individuel (12), pour compter le nombre de barres métalliques (11) prélevées chaque fois par ledit moyen de chargement (13, 15, 16), et pour calculer la réduction progressive de la condition de charge du moyen de contention (12) relatif au moyen de la différence de volume, en estimant la hauteur réelle du niveau de charge.
